Europäisches Patentamt

European Patent Office

Office européen des brevets

(11) Numéro de publication: **0 415 312 A1**

## DEMANDE DE BREVET EUROPEEN

(21) Numéro de dépôt: 90116373.3

(22) Date de dépôt: 27.08.90

(51) Int. Cl.⁵: **H04M 19/08**

(30) Priorité: 31.08.89 FR 8911427

(43) Date de publication de la demande:
06.03.91 Bulletin 91/10

(84) Etats contractants désignés:
**AT BE CH DE DK ES FR GB IT LI NL SE**

(71) Demandeur: **ALCATEL BUSINESS SYSTEMS**
**12, rue de la Baume**
**F-75008 Paris(FR)**

(72) Inventeur: **Jenneve, Dany**
**6, rue La Bruyère**
**F-67200 Strasbourg(FR)**
Inventeur: **Misslin, Gilles**
**17, rue de Haslach**
**F-67200 Strasbourg(FR)**

(74) Mandataire: **Weinmiller, Jürgen et al**
**Lennéstrasse 9 Postfach 24**
**W-8133 Feldafing(DE)**

(54) Agencement d'alimentation pour terminal téléphonique et/ou télématique.

(57) L'agencement d'alimentation pour terminal (1), téléphonique et/ou télématique, est destiné à être raccordé à une liaison (4) assurant les transmissions pour le terminal et sa téléalimentation.

Il comporte un circuit d'alimentation à découpage (7), destiné à venir se raccorder aux fils de la liaison et un circuit régulateur (8) qui est inséré en sortie du circuit d'alimentation à découpage, qui est chargé d'alimenter au moins partiellement le terminal et qui comporte des moyens pour assurer le démarrage progressif du circuit d'alimentation à découpage à la mise sous tension du terminal par l'intermédiaire de la liaison.

EP 0 415 312 A1

FIG.1

## AGENCEMENT D'ALIMENTATION POUR TERMINAL TÉLÉPHONIQUE ET/OU TÉLÉMATIQUE

L'invention concerne les agencements d'alimentation incorporés dans les terminaux téléphoniques et/ou télématiques desservis par des liaisons de transmission qui assurent également leur téléalimentation en énergie électrique et par exemple ceux que comportent les terminaux à interface S raccordés par bus passif à un réseau numérique à intégration de services.

De tels agencements d'alimentation ont classiquement pour objectif de limiter à des valeurs raisonnables prédéterminées le courant qu'est susceptible de demander un terminal à la liaison de transmission et d'alimentation à laquelle il est raccordé.

L'adjonction d'un circuit d'alimentation à découpage aux agencements d'alimentation à limiteur de courant permet d'obtenir une plus grande souplesse dans l'exploitation de l'énergie électrique reçue par un terminal. Toutefois un état de blocage de l'agencement d'alimentation peut être atteint si la demande en énergie du circuit d'alimentation à découpage devient supérieure à ce que peut fournir la liaison d'alimentation en raison de la présence du limiteur de courant.

L'existence de terminaux dotés de connecteurs standardisés permettant un raccordement facile, par exemple par simple embrochage en divers points dûment équipés d'une ou de plusieurs liaisons d'une installation téléphonique et/ou télématique en fonction des besoins immédiats et éventuellement temporaires des utilisateurs, implique aussi que les terminaux et en particulier leurs agencements d'alimentation ne perturbent pas le fonctionnement de la source d'énergie distante, lors notamment des opérations de raccordement. Ces dernières peuvent par exemple occasionner une mise en court-circuit de la source d'énergie par un agencement d'alimentation, si cet agencement comporte des condensateurs qui viennent directement se charger aux bornes de cette source d'énergie distante, via la liaison de transmission et d'alimentation à laquelle l'agencement est alors raccordé.

De plus, il est aussi demandé de pouvoir venir raccorder un terminal sur une liaison de transmission et d'alimentation desservant déjà d'autres terminaux sans interrompre le fonctionnement et les éventuels échanges d'information en cours. Or en l'absence d'une parfaite simultanéité de connexion des différents conducteurs d'un connecteur d'un terminal, lors d'un raccordement sur une liaison multifilaire de transmission et d'alimentation active, un déséquilibre transitoire est susceptible de venir perturber les transmissions en cours sur la liaison d'une manière qui n'est pas admissible.

La présente invention propose donc un agencement d'alimentation pour terminal téléphonique et/ou télématique destiné à être raccordé à une liaison de transmission assurant simultanément son alimentation au moins partielle en énergie électrique, via un montage de limitation d'intensité.

Selon une caractéristique de l'invention, l'agencement d'alimentation comporte un circuit d'alimentation à découpage, de type convertisseur de puissance, destiné venir se raccorder aux fils de la liaison et un circuit régulateur qui est inséré en sortie du circuit d'alimentation à découpage et dans lequel est incorporé le montage de limitation d'intensité, ledit circuit régulateur, chargé d'alimenter au moins partiellement le terminal, comportant des moyens pour assure le démarrage progressif du circuit d'alimentation à découpage à la mise sous tension dudit terminal par l'intermédiaire de la liaison.

L'invention, ses caractéristiques et ses avantages sont précisés dans la description qui suit, en relation avec les figures évoquées ci-dessous.

La figure 1 présente un schéma de principe montrant un système d'alimentation d'un terminal téléphonique et/ou télématique à partir d'une source située dans un terminaison distante à laquelle le terminal est relié par une liaison de transmission assurant aussi l'alimentation en énergie.

La figure 2 présente un schéma d'un agencement d'alimentation, selon l'invention, pour terminal téléphonique et/ou télématique destiné à être raccordé à une liaison de transmission et d'alimentation.

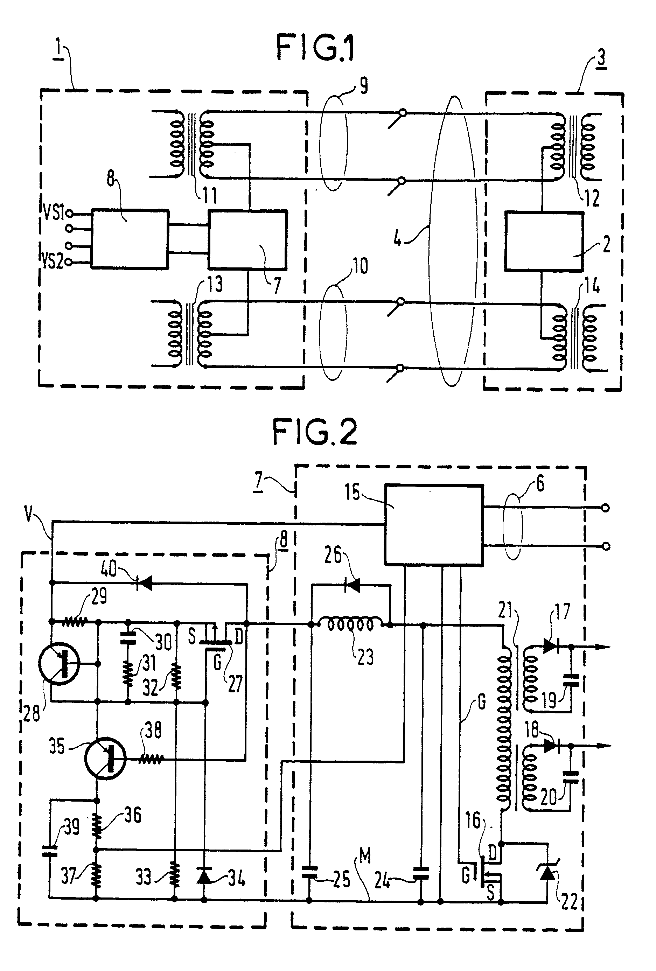

Le système connu, objet de la figure 1, permet d'alimenter en énergie électrique un ou plusieurs terminaux téléphoniques et/ou télématiques 1, à partir d'une source 2 distante usuellement située dans une terminaison de raccordement 3 à laquelle est reliée une liaison de transmission et d'alimentation 4 du ou des terminaux 1.

Les terminaux ici considérés sont par exemple des terminaux d'abonnés d'un réseau numérique à intégration de services (RNIS) qui présentent une interface standard d'accès, de type S, par l'intermédiaire de laquelle ils se raccordent à une liaison de transmission et d'alimentation 4 de type bus. Des détails complémentaires sur les éléments évoqués ci-dessus qui ne sont pas développés ici, en particulier sur les terminaux et les terminaisons, sont susceptibles d'être trouvés dans l'article intitulé "Les installations terminales d'abonnés" publié à Paris, en 1987 dans le troisième numéro de la revue "Commutation et transmission" et dans l'ouvrage "Le RNIS" publié à Paris en 1987 sous le pseudonyme G.DICENET dans la "Collection Technique des Télécommunications".

Chaque terminal 1 comporte un agencement téléphonique et/ou télématique, non représenté ici car sans rapport direct avec l'invention, et un agencement auxiliaire destiné à l'alimenter au moins partiellement en énergie électrique à partir de la liaison 4 auquel ce terminal est raccordé. Le schéma fonctionnel d'un exemple d'agencement téléphonique est proposé en page 189 de l'ouvrage évoqué ci-dessus, il associe un module de gestion d'interface S à un module chargé des fonctions téléphoniques et acoustiques et à un module de dialogue usager-terminal qui ne seront pas développés ici.

L'agencement auxiliaire d'alimentation 5 comporte un circuit d'alimentation à découpage 7, de type convertisseur de puissance, usuel, alimenté par la liaison 4 et un circuit régulateur 8, qui est placé en aval du circuit d'alimentation à découpage par rapport à la liaison 4 et au travers duquel le terminal le comportant est au moins partiellement alimenté.

Dans l'exemple proposé où la liaison 4 est de type bus RNIS, cette liaison comport deux paires de fils 9 et 10 permettant de transmettre séparément les signaux dans chacun des deux sens de transmission entre l'agencement téléphonique et/ou télématique du terminal et l'agencement correspondant, non figuré, de la terminaison 3. La paire 9 relie entre eux deux transformateurs 11,12 respectivement localisés l'un dans le terminal 1 et l'autre dans la terminaison 3, la paire 10 reliant deux autres transformateurs 13 et 14 également localisés le premier dans le terminal 1 et l'autre dans la terminaison 3.

L'alimentation du terminal 1 par la source 2, ici située dans la terminaison 3, s'effectue en fantôme par l'intermédiaire des deux paires 9 et 10, la source 2 étant connectée entre les points milieux des enroulements des transformateurs 12 et 14 aux bornes d'extrémité desquels ces deux paires sont connectées, alors que le circuit d'alimentation à découpage 7 est connecté aux points milieux des enroulements des transformateurs 11 et 13 aux bornes d'extrémité desquels ces mêmes paires 9 et 10 sont aussi connectées . de manière connue , non représentée ici les enroulements, ici non raccordés, des transformateurs 11 à 14 desservent des agencements de transmission, non représentés,du terminal et de la terminaison qui les comportent.

Le circuit régulateur 8 est raccordé à la liaison 4 au travers du circuit d'alimentation à découpage 7, celui-ci lui fournissant l'énergie électrique à répartir entre les divers circuits concernés, non représentés ici, du terminal 1 qui les comporte. Le circuit régulateur 8 est apte à réagir sur le circuit d'alimentation à découpage 7, il fournit une ou plusieurs tensions d'alimentation, telles VS1 et VS2, aux circuits concernés du terminal 1.

L'exemple d'agencement d'alimentation,présenté en figure 2, associe comme on l'a vu un circuit régulateur 8 à un circuit d'alimentation à découpage 7, il s'insère entre les points milieux des enroulements des transformateurs 11 et 13 aux bornes d'extrémité desquels les paires 9 et 10 sont raccordées, une paire de fils d'alimentation 6 reliant le circuit d'alimentation à découpage 7 à ces deux points milieux.

Le circuit d'alimentation à découpage 7 comporte un transistor de découpage 16, de type MOS, placé sous la commande d'un dispositif 15, apte à faire varier la largeur des impulsions de commande en fonction des besoins; ce dispositif 15,classique et non détaillé car sans rapport direct avec l'invention est ici sensible aux signaux que lui fournit le circuit régulateur 8, via un fil C, d'une manière qui sera évoquée plus loin.

Les tensions VS1 et VS2 fournies par le circuit d'alimentation à découpage 7, qui sont ici continues, elles sont obtenues de deux montages redresseurs à diodes 17, 18 et condensateurs 19,20 reliés chacun aux bornes d'un enroulement secondaire d'un transformateur 21 dont le primaire est alimenté sous le contrôle du transistor 16.

Ce transistor est relié par son drain à une première borne de l'enroulement primaire du transformateur 21, par sa source à un fil de masse M du circuit d'alimentation à découpage 7 et par sa grille à un fil G par l'intermédiaire duquel le dispositif 15 commande ses commutations de l'état passant à l'état bloqué et inversement.

5 Le transistor 16 est de plus protégé contre les surtensions par une diode Zener 17 connectée entre sa source et son drain respectivement par sa propre anode et par sa cathode.

La seconde borne de l'enroulement primaire du transformateur 21 est reliée au fil positif V du circuit d'alimentation 7 via le circuit régulateur 8.

Un filtre radio-fréquence composé d'une inductance 23 et de deux condensateurs 24 et 25 est placé aux bornes du montage constitué par l'enroulement primaire du transformateur 21 et par le transistor 16 en série. Le condensateur 24 est placé aux bornes de l'ensemble formé par l'enroulement et par le transistor 16 en série. Le condensateur 22 est relié d'une part au point commun à la source du transistor 16, au condensateur 24 et au fil M, d'autre part au point commun à l'enroulement du transformateur 21 et au condensateur 24, via l'inductance 19, une diode 26 est classiquement associée à cette inductance en tant que diode de roue libre.

Un second transistor 27, de type MOS, situé dans le circuit régulateur 8 est relié par son drain au point commun au condensateur 25 et à l'inductance 23, en sortie du filtre du circuit d'alimentation à découpage. Il est inséré en amont de l'inductance sur le fil positif V auquel il est relié par un montage de limitation d'intensité associant un transistor 28, de type PNP, à une résistance 29, de faible valeur, en série entre la source du transistor 27 et le fil V. La résistance 29 sert de résistance de polarisation au transistor 28 entre l'émetteur et la base duquel elle est placée, ce transistor ayant sa base et son collecteur simultanément reliés à la grille du transistor 27.

Un montage de temporisation, composé d'un condensateur 30 et d'une résistance 31 en série, est inséré entre la source et la grille du transistor 27, en parallèle avec une résistance 32, de forte valeur. Une résistance 33 est associée à la résistance 32 pour former un pont diviseur entre la source du transistor 27 et le fil M connecté à la source du transistor 16, le point commun aux résistances 29 et 30 étant relié à la grille du transistor 27. Une diode 34, reliée par son anode au fil M, est montée en parallèle avec la forte résistance 33 entre ce fil M et la grille du transistor 27.

Un transistor 35 , de type PNP, est monté en amont d'un pont diviseur à résistances 36, 37 pour transmettre un signal de commande au circuit d'alimentation à découpage 7 en fonction de la tension présente entre le drain et la source du transistor 27. A cet effet, le transistor 35 a sa base reliée au drain du transistor 27, via une résistance 38, son émetteur relié à la grille du transistor 27 et son collecteur relié à l'une des extrémités du pont diviseur à résistances 36, 37 dont l'autre extrémité est reliée au fil M, un condensateur 39 étant monté en parallèle aux bornes de ce pont. Le fil de commande C, connecté au point commun aux résistances 36 et 37, permet de transmettre le signal de commande au circuit d'alimentation à découpage.

Une diode 40, reliée par son anode au drain du transistor 27 et par sa cathode à l'émetteur du transistor 28, complète le montage.

Le circuit régulateur 8 permet de limiter le courant demandé à la source 2, distante, à la mise sous tension du terminal 1 et en cas de court-circuit affectant ce terminal 1. En effet pour un terminal qui consomme par exemple un watt au maximum, ceci ne représente qu'un courant théorique de 25 milliampères sous 40 volts, alors que cela représente un courant de 40 milliampères sous 25 volts,de plus il faut tenir compte des courants d'appel et de l'énergie à emmagasiner à la mise sous tension. A cet effet la conduction du transistor 28 est inhibée tant que le courant traversant la résistance 29 n'atteint pas une valeur suffisante. Dans un exemple de réalisation où la tension normalement présente au niveau du fil V est de 40 volts et où la résistance 29 a une valeur d'environ 10 ohms, le transistor 28 ne conduit qu'à partir du moment où le courant traversant cette résistance 29 dépasse 70 milliampères.

En fonctionnement normal le transistor 28 est bloqué et la grille du transistor 27 est polarisée par le pont diviseur à résistances 32, 33 à une valeur pour laquelle ce transistor 27 est saturé, sa source et son drain étant pratiquement en court-circuit; l'alimentation du terminal 1 est alors normalement sous le contrôle du circuit d'alimentation à découpage.

L'inductance 23 protège les transistors MOS contre les variations d'intensité trop brutales et la diode 26 lui sert de roue libre, comme indiqué plus haut.

Quand un trop fort appel de courant, ici de plus de 70 milliampères, survient, le transistor 28 se sature, la grille et la source du transistor 27 sont portées au même potentiel et ce transistor 27 se bloque,l'enroulement primaire du transformateur 21 n'est plus alimenté.

Le transistor 35 est utilisé en régime linéaire en fonction de la tension existant entre la source et le drain du transistor 27. Il permet de contrôler les domaines de fonctionnement en puissance du circuit d'alimentation à découpage 7,via le fil C et par l'intermédiaire de la tension variable présente aux bornes de la résistance 37.

Cette tension ici positive et variable à partir de zéro volt, est employée pour modifier le rapport cyclique de découpage imposé par le dispositif 15 par l'intermédiaire du transistor 16.

Si le terminal 1 est prévu pour pouvoir être connecté à la liaison 4 alors que celle-ci est en service et par conséquent sous tension, il importe que le terminal ne commence à être électriquement alimenté par la liaison que lorsqu'il est connecté à chacun des quatre fils de cette liaison pour les raisons évoquées dans le préambule.

A cet effet à la mise sous tension du terminal 1 par l'intermédiaire de la liaison 4, le montage de temporisation, constitué par le condensateur 30 et la résistance 31, retarde la montée en tension entre la grille et la source du transistor 27 pendant que se charge le condensateur 30,le transistor 35 se sature et permet la charge du condensateur 36 qui bloque le transistor 16.

L'énergie, transmise par la liaison 4, ne parvient pas alors jusqu'au transformateur 21 et les circuits situés en aval de ce transformateur ne sont pas alimentés. Suite à la charge des condensateurs, le transistor 27 se met à conduire et bloque le transistor 35, la décharge lente du condensateur 36 au travers des résistances 36 et 37 assure un démarrage progressif du découpage par le circuit 7.

Le transistor 35 interdit le découpage en cas de limitation du courant.

La diode 40 protège les transistors 27 et 28 contre les courants inverses susceptibles de provenir des condensateurs 25 et 26 dans toute condition susceptible de conduire à la décharge rapide de ces derniers.

## Revendications

1/ Agencement d'alimentation pour terminal téléphonique et/ou télématique (1) destiné à être raccordé à une liaison (4) dé transmission assurant simultanément son alimentation au moins partielle en énergie électrique, via un montage de limitation d'intensité (24), caractérisé en ce qu'il comporte un circuit d'alimentation à découpage (7), de type convertisseur de puissance, destiné à venir se raccorder aux fils de la liaison et un circuit régulateur (8) qui est inséré en sortie du circuit d'alimentation à découpage et dans lequel est incorporé le montage de limitation d'intensité, ledit circuit régulateur, chargé d'alimenter au moins partiellement le terminal, comportant des moyens (25,28,35,38,27,30,31) pour assurer le démarrage progressif du circuit d'alimentation à découpage(7), à la mise sous tension dudit terminal par l'intermédiaire de la liaison.

2/ Agencement d'alimentation, selon la revendication 1, caracterisé en ce qu'il comporte des moyens (27,35,30,31,39) pour retarder temporairement la fourniture d'energie au terminal par le circuit d'alimentation à découpage (7) à la mise sous tension de l'agencement d'alimentation, notamment lors d'une connexion à la liaison (4) sous tension.

3/ Agencement d'alimentation, selon la revendication 2, caractérisé en ce qu'il comporte des moyens (27,28,29 ) pour limiter l'appel de courant sur la liaison (4), par le terminal (1) qui le comporte, à la mise sous tension par l'intermédiaire de cette liaison.

4/ Agencement d'alimentation, selon la revendication 3, caractérisé en ce que les moyens de limitation d'appel de courant associent un transistor (27), de type MOS, qui contrôle la continuité d'un fil positif d'alimentation du terminal, en fonction du signal appliqué à sa grille, celle-ci, polarisée par l'intermédiaire d'un pont diviseur à résistances (32,33) inséré entre le fil positif et un fil de masse,au point commun duquel ladite grille est connectée, étant de plus susceptible d'être mise en court-circuit avec sa source par la conduction d'un transistor (28), de type PNP, dont la base est reliée au dit fil positif en amont du transistor (27) et en aval d'une borne d'une faible résistance de polarisation (29) à l'autre borne de laquelle l'émetteur de ce transistor (28) est relié.

5/ Agencement d'alimentation, selon la revendication 4, caractérisé en ce que les moyens de retard temporaire de fourniture d'énergie associent les moyens de limitation d'appel comportant de plus un montage temporisateur, constitué par un condensateur (30) et une résistance (31) en série entre grille et source du transistor (27), à un condensateur ( 39) connecté entre le fil positif, au niveau de la source du transistor (27) et via un transistor (32), et le fil de masse, de manière à bloquer un transistor de découpage (16) du circuit d'alimentation à découpage pendant la charge du condensateur (39),à la mise sous tension du terminal par l'intermédiaire de la liaison (4).

# FIG.1

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,A | DE-C-3 804 250 (SIEMENS)<br>* colonne 1, lignes 15 - 24 * * colonne 2, lignes 2 - 9 @ colonne 2, ligne 46 - colonne 3, ligne 18 *<br>– – – | 1-4,5 | H 04 M 19/08 |
| Y | DE-A-3 701 395 (ANT NACHRICHTENTECHNIK GMBH)<br>* colonne 2, ligne 43 - colonne 3, ligne 41 *<br>– – – | 1-4 | |
| A | DE-C-3 804 251 (SIEMENS)<br>* colonne 2, ligne 25 - colonne 3, ligne 25 *<br>– – – | 1-5 | |
| A | EP-A-0 198 360 (NIXDORF COMPUTER AKTIENGE-SELLSCHAFT)<br>* page 11, ligne 20 - page 12, ligne 12 *<br>– – – – – | 1-5 | |

**DOMAINES TECHNIQUES RECHERCHES (Int. Cl.5)**

H 04 M

Le présent rapport de recherche a été établi pour toutes les revendications

| Lieu de la recherche | Date d'achèvement de la recherche | Examinateur |
|---|---|---|
| La Haye | 05 novembre 90 | VERSLYPE J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant